(19) Europäisches Patentamt
European Patent Office
Office européen des brevets

(11) **EP 3 197 688 B1**

(12) **EUROPÄISCHE PATENTSCHRIFT**

(45) Veröffentlichungstag und Bekanntmachung des Hinweises auf die Patenterteilung:
**25.11.2020 Patentblatt 2020/48**

(21) Anmeldenummer: **15730501.2**

(22) Anmeldetag: **22.06.2015**

(51) Int Cl.:
**B60C 11/16** (2006.01)

(86) Internationale Anmeldenummer:
**PCT/EP2015/063920**

(87) Internationale Veröffentlichungsnummer:
**WO 2016/045807** (31.03.2016 Gazette 2016/13)

(54) **FAHRZEUGLUFTREIFEN MIT SPIKES IM LAUFSTREIFEN**

VEHICLE TIRE COMPRISING SPIKES IN THE TREAD

PNEUMATIQUE À BANDE DE ROULEMENT EST POURVUE DE CLOUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.09.2014 DE 102014219615**

(43) Veröffentlichungstag der Anmeldung:
**02.08.2017 Patentblatt 2017/31**

(73) Patentinhaber: **Continental Reifen Deutschland GmbH**
**30165 Hannover (DE)**

(72) Erfinder:
• **BRANDAU, Christian**
**31542 Nenndorf (DE)**
• **SCHLITTENHARD, Jan**
**30900 Wedemark (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
EP-A1- 2 397 346          EP-A2- 0 864 449
DE-A1-102009 044 767

**Beschreibung**

Die Erfindung betrifft einen Fahrzeugluftreifen, insbesondere für Personenkraftwagen oder Vans, für den Einsatz unter winterlichen Fahrbedingungen mit einem Laufstreifen, in welchem Spikes aus einem Spikekörper und einem Spikepin verankert sind.

Es ist bekannt und üblich, Fahrzeugluftreifen mit Spikes auszustatten, um bei winterlichen Fahrbedingungen die Kraftübertragung des Reifens auf schnee- und/oder eisbedeckten Fahrbahnen zu erhöhen. Auf unbedeckten (schnee- und eisfreien) Fahrbahnen führen Spikes allerdings zu einer erheblichen Abnutzung des Fahrbahnbelages, weshalb bis vor kurzem, beispielsweise in Finnland, Schweden und Norwegen, die Maximalanzahl an Spikes pro Reifen gesetzlich begrenzt war. Nach der aktuellen Gesetzeslage ist es in diesen Ländern jetzt gestattet, die Spikeanzahl frei zu wählen, wobei die bespikten Reifen einen speziellen Straßenabriebtest für ihre Zulassung bestehen müssen. Ein derartiger Straßenabriebtest ist aus der DE 10 2011 056 158 A1, welche ein "Verfahren zum Feststellen des Abriebs eines Straßenbelages durch Spikereifen" betrifft, bekannt.

Der Eis- und Schneegriff eines Reifens mit einem bespiketen Laufstreifen wird neben der Anzahl der Spikes auch durch die Masse eines Spikes, die Spikegeometrie, die Pingeometrie, den Überstand der Spikepins über die Laufstreifenoberfläche sowie durch die Position der Spikes im Laufstreifen bestimmt. Es ist üblich, Spikes über den Reifenumfang in Spikespuren - entlang von parallel zum Reifenzenit in Umfangsrichtung kreisförmig umlaufenden Linien - anzuordnen. Durch Verwendung mehrerer Spuren kann verhindert werden, dass beim Abrollen des Reifens ein nachfolgend in den Untergrund eintretender Spike in eine bereits vorhandene Kratzspur im Eis, welche ein vorher in den Untergrund eingetretener Spike verursacht hat, eintritt. Darüber hinaus ist die Wirkung von Spikes in den der Laufstreifenmitte benachbarten Spikespuren etwas höher, was dazu führt, dass möglichst viele Spuren soweit wie möglich nahe dem Reifenmittelbereich angeordnet werden. In der DE 10 2009 044 767 A1 wird beispielsweise vorgeschlagen, die Spikes in Spikespuren im Laufstreifen von Winterreifen derart anzuordnen, dass der Mindestabstand der Spikes 125 mm beträgt.

Aus der EP 0 864 449 A2 ist es bekannt, anstelle herkömmlicher Spikes aus Spikekörper und Spikepin lamellenartig gestaltete Non-Slip Elemente aus einem harten Material in schlitzartigen Ausformungen des Laufstreifens zu verankern. Diese Non-Slip Elemente sollen ein wesentlich geringeres Gewicht aufweisen als die herkömmlichen Spikes aus Spikekörper und Spikepin und sollen in bestimmter Orientierung im Laufstreifen eines Fahrzeugluftreifens positioniert werden. Aus der EP 2 397 346 A1 ist ein Winterreifen mit einem Blockprofil im Laufstreifen bekannt, wobei der Laufstreifen nach einem Verfahren der Pitchlängen-Variation in jeder Laufstreifenhälfte in gleichartig gestaltete, in Umfangsrichtung aufeinander folgende Profilabschnitte, sogenannte Pitches, gegliedert ist und wobei in jeder Laufstreifenhälfte in jedem Pitch ein Spikeloch für einen herkömmlich ausgestalteten Spike vorgesehen ist.

Als Maß für die Ice-Performance und als Maß für die auf schnee- und eisfreier Fahrbahn verursachten Fahrbahnschäden kann die Aufschlagsenergie (kinetische Energie) eines Spikes herangezogen werden. Sie kann gemäß der aus der klassischen Mechanik bekannten Formel ($E = m \times v^2/2$) mit m als Spikemasse und v als Spikegeschwindigkeit. Da die Geschwindigkeit einen quadratischen Einfluss auf die Aufschlagsenergie hat, ist die Spikemasse insbesondere bei geringen Fahrgeschwindigkeiten bis zu 70 km/h für die Aufschlagsenergie maßgeblich.

Für eine gute Performance auf vereistem Untergrund ist es notwendig, dass die Spikes in die Eisoberfläche eindringen können, wofür eine bestimmte Mindestaufschlagsenergie benötigt wird. Je größer die Aufschlagsenergie ist, desto mehr Fahrbahnschäden fallen allerdings auf eis- und schneefreien Fahrbahnen an.

Wird die Spikemasse nun so gewählt, dass die Aufschlagsenergie bei den auf eis- und/oder schneebedeckten Fahrbahnen üblichen Fahrgeschwindigkeiten von 10 km/h bis 70 km/h gerade ausreicht, um in etwaiges Eis einzudringen, so treten geringere Schäden auf trockenen Fahrbahnen auf.

Der Erfindung liegt die Aufgabe zugrunde, die Spikeanzahl und die Spikemasse derart aufeinander abzustimmen, dass die Kriterien der in einigen Ländern (Finnland, Norwegen, Schweden) vorgeschriebenen Straßenabriebtests erfüllt werden und gleichzeitig der Reifen einen möglichst optimalen Schnee- und Eisgriff gewährleistet.

Gelöst wird die gestellte Aufgabe erfindungsgemäß dadurch, dass folgende Beziehung gilt:

$$\frac{A_{sp} \times m_{sp}}{U} \leq 0{,}8$$

mit

A$_{sp}$ — Spikeanzahl im Laufstreifen,

m$_{sp}$ — Zahl, welche der Masse eines Spikes in Gramm entspricht, wobei $0{,}4g \leq m_{sp} \leq 0{,}8g$,

U — Zahl, welche dem theoretischen Rollumfang gemäß E.T.R.T.O., Engineering Design Information - 2014, in Zentimeter entspricht,

wobei A$_{sp}$ > 130 ist.

Die in die Formel einzusetzende Masse des Spikes entspricht dabei der Gesamtmasse des Spikes bestehend aus den Massen des Spikekörpers und des Spikepins. Ein Reifen, bei dem Spikeanzahl und Spikemasse gemäß obiger Beziehung aufeinander abgestimmt sind, weist besonders gute Schnee- und Eisgriffeigenschaften auf und erfüllt die Anforderungen des Straßenabriebtests.

Der theoretische Rollumfang (Theoretical Rolling Circumference) wird gemäß der Publikation "Engineering Design Information -2014" der E.T.R.T.O., Passenger Car Tyres - Design Guide, PC.7 ermittelt.

Bei einer bevorzugten Ausführung der Erfindung gilt zusätzlich folgende Beziehung:

$$\frac{A_{sp} \times m_{sp}}{U} \geq 0{,}4$$

Bei einer bestimmten, vorgegebenen bzw. gewünschten Spikeanzahl ergibt sich daraus eine gewisse Untergrenze für die Spikemasse für eine Mindestaufschlagsenergie bei geringen Fahrgeschwindigkeiten.

Bei einer bevorzugten Ausführung der Erfindung werden eine geringe Spikemasse und eine hohe Spikeanzahl gewählt. Die Spikemasse beträgt erfindungsgemäß höchstens 0,8 g, insbesondere höchstens 0,7 g, und mindestens 0,4 g. Diese Massenbereiche weichen von den gängigen Spikemassen, welche von 1,0 g bis 1,1 g betragen, deutlich ab. Werden Spikes einer Masse von 0,4 g bis 0,8 g gewählt, ist die Aufschlagsenergie pro Spike reduziert. Da auf Eis- und Schneefahrbahnen die Fahrgeschwindigkeiten im Allgemeinen gering sind, ist der Einfluss der Spikemasse auf die Größe der Aufschlagsenergie größer als bei hohen Fahrgeschwindigkeiten. Aufgrund der erfindungsgemäß vorgeschlagenen geringen Masse ist die Aufschlagsenergie pro Spike zwar geringer, gemäß der Erfindung ist jedoch die Spikeanzahl im Laufstreifen indirekt proportional zur Masse eines einzelnen Spikes, sodass der Laufstreifen mit einer größeren Anzahl an Spikes ausgestattet wird.

Besonders bevorzugt ist die gesamte Anzahl $A_{sp}$ der Spikes im Laufstreifen ≥ 150, insbesondere je nach Reifendimension ist $A_{sp}$ sogar ≥ 170 oder ≥ 190. Dadurch wird der Eisgriff maßgeblich verbessert, wobei sich die Schäden auf trocknen Fahrbahnen im gesetzlichen zulässigen Rahmen bzw. sogar darunter bewegen. Die Erfindung geht daher von der Erkenntnis aus, dass der Straßenabrieb insbesondere durch die Masse der einzelnen Spikes und weniger von der Gesamtanzahl an Spikes am Reifen beeinflusst wird.

Um den Spikes eine wie oben angeführt geringe Masse zu verleihen, können Spikepin und Spikekörper, insbesondere wenn die üblichen Materialen verwendet werden, geometrisch verkleinert werden oder aus leichteren Materialien gefertigt werden, die Spikepins bestehen beispielsweise aus Keramik oder Hartmetall, die Spikekörper beispielsweise aus Aluminium, Gummi oder Kunststoff.

Die Spikes können ferner im Laufstreifen nach wie vor in an sich bekannter Weise, insbesondere in Spikespuren, angeordnet sein.

Nachfolgend wird ein Bespiel einer gemäß der Erfindung erfolgten Auslegung bei einem Winterreifen der Dimension 205/55R16 angegeben:

Umfang U: 193 cm, Spikemasse: 0,78 g, Spikeanzahl: 190.

**Patentansprüche**

1. Fahrzeugluftreifen, insbesondere für Personenkraftwagen oder Vans, für den Einsatz unter winterlichen Fahrbedingungen mit einem Laufstreifen, in welchem Spikes aus einem Spikekörper und einem Spikepin verankert sind,
   **dadurch gekennzeichnet,**
   **dass** folgende Beziehung gilt:

   $$\frac{A_{sp} \times m_{sp}}{U} \leq 0{,}8$$

   mit

   $A_{sp}$ Spikeanzahl im Laufstreifen,
   $m_{sp}$ Zahl, welche der Masse eines Spikes in Gramm entspricht, wobei $0{,}4g \leq m_{sp} \leq 0{,}8g$,
   U Zahl, welche dem theoretischen Rollumfang gemäß E.T.R.T.O., Engineering Design Information - 2014, in Zentimetern entspricht,

   wobei $A_{sp} > 130$ ist.

2. Fahrzeugluftreifen nach Anspruch 1, **dadurch gekennzeichnet, dass**:

   $$\frac{A_{sp} \times m_{sp}}{U} \geq 0{,}4$$

   gilt.

3. Fahrzeugluftreifen nach Anspruch 2, **dadurch gekennzeichnet, dass**:

   $$m_{sp} \leq 0{,}7g$$

   ist.

4. Fahrzeugluftreifen nach einem der Ansprüche 1 bis 3, **dadurch gekennzeichnet, dass** $A_{sp} > 150$ ist.

5. Fahrzeugluftreifen nach einem der Ansprüche 1 bis 4, **dadurch gekennzeichnet, dass** $A_{sp} \geq 170$ ist.

6. Fahrzeugluftreifen nach einem der Ansprüche 1 bis 5, **dadurch gekennzeichnet, dass** der Pin der Spikes aus Keramik oder Hartmetall gefertigt ist.

7. Fahrzeugluftreifen nach einem der Ansprüche 1 bis 6, **dadurch gekennzeichnet, dass** der Spikekörper der Spikes aus Aluminium, Gummi oder Kunststoff besteht.

## Claims

1. Pneumatic vehicle tire, especially for passenger cars or vans, for use under wintry driving conditions having a tread in which spikes composed of a spike body and a spike pin are anchored, **characterized in that** the following relationship applies:

$$\frac{A_{sp} \times m_{sp}}{U} \leq 0{,}8$$

where

$A_{sp}$ is the number of spikes in the tread,
$m_{sp}$ is the number corresponding to the mass of a spike in grams, wherein $0.4\,g \leq m_{sp} \leq 0.8\,g$,
$U$ is the number corresponding to the theoretical rolling circumference according to E.T.R.T.O., Engineering Design Information - 2014, in centimetres,

wherein $A_{sp}$ is > 130.

2. Pneumatic vehicle tire according to Claim 1, **characterized in that**

$$\frac{A_{sp} \times m_{sp}}{U} \geq 0{,}4$$

applies.

3. Pneumatic vehicle tire according to Claim 2, **characterized in that**

$$m_{sp} \; is \; \leq 0.7 \; g.$$

4. Pneumatic vehicle tire according to any of Claims 1 to 3, **characterized in that** $A_{sp} \geq 150$.

5. Pneumatic vehicle tire according to any of Claims 1 to 4, **characterized in that** $A_{sp} \geq 170$.

6. Pneumatic vehicle tire according to any of Claims 1 to 5, **characterized in that** the pin of the spikes is manufactured from ceramic or hard metal.

7. Pneumatic vehicle tire according to any of Claims 1 to 6, **characterized in that** the spike body of the spikes is made of aluminium, rubber or plastic.

## Revendications

1. Pneumatique de véhicule, en particulier pour véhicules de tourisme ou camionnettes, pour l'utilisation dans des conditions de conduite hivernales, comprenant une bande de roulement dans laquelle sont ancrés des crampons constitués d'un corps de crampon et d'une pointe de crampon, **caractérisé en ce que** l'on a la relation suivante :

$$\frac{A_{sp} \times m_{sp}}{U} \leq 0{,}8$$

dans laquelle

$A_{sp}$ est le nombre de crampons dans la bande de roulement,
$m_{sp}$ est le nombre qui correspond à la base d'un crampon en grammes, avec $0{,}4\,g \leq m_{sp} \leq 0{,}8\,g$,
$U$ est le nombre qui correspond à la circonférence de roulement théorique selon E.T.R.T.O., Engineering Design Information - 2014, en centimètres, avec $A_{sp}$ > 130.

2. Pneumatique de véhicule selon la revendication 1, **caractérisé en ce que** l'on a :

$$\frac{A_{sp} \times m_{sp}}{U} \geq 0{,}4$$

3. Pneumatique de véhicule selon la revendication 2, **caractérisé en ce que** :

$$m_{sp} \; \leq 0{,}7 \; g.$$

4. Pneumatique de véhicule selon l'une quelconque des revendications 1 à 3, **caractérisé en ce que** :

$$Asp \geq 150.$$

5. Pneumatique de véhicule selon l'une quelconque des revendications 1 à 4, **caractérisé en ce que** :

$$Asp \geq 170.$$

6. Pneumatique de véhicule selon l'une quelconque des revendications 1 à 5, **caractérisé en ce que** la pointe du crampon est fabriquée en céramique ou en métal dur.

7. Pneumatique de véhicule selon l'une quelconque des revendications 1 à 6, **caractérisé en ce que** le corps de crampon du crampon se compose d'aluminium, de caoutchouc ou de plastique.

**IN DER BESCHREIBUNG AUFGEFÜHRTE DOKUMENTE**

**In der Beschreibung aufgeführte Patentdokumente**

- DE 102011056158 A1
- DE 102009044767 A1
- EP 0864449 A2
- EP 2397346 A1

**In der Beschreibung aufgeführte Nicht-Patentliteratur**

- Engineering Design Information -2014. *E.T.R.T.O., Passenger Car Tyres - Design Guide, PC.7 ermittelt*